# EUROPEAN PATENT APPLICATION

(11) **EP 4 769 142 A1**
(43) Date of publication of application: **01.07.2026**
(21) Application number: 25200328.0
(22) Date of filing: 04.09.2025
(51) Int. Cl.: G06F 9/50

(54) **SYSTEM AND METHOD FOR RESOURCE ALLOCATION IN A VEHICLE**

(30) Priority: 26.12.2024 US 202419002007
(71) Applicant: TOYOTA JIDOSHA KABUSHIKI KAISHA, Toyota-shi, Aichi-ken 471-8571 (JP)
(72) Inventor: MOMOI, Akiyoshi, Chuo-Ku, 103-0022 (JP); GOTO, Toshio, Chuo-Ku, 103-0022 (JP); TSUKADA, Yoshikazu, Chuo-Ku, 103-0022 (JP); MURAKAMI, Hiroshi, Chuo-Ku, 103-0022 (JP); MASUDA, Yasutomo, Chuo-Ku, 103-0022 (JP); KASAOKI, Seisuke, Chuo-Ku, 103-0022 (JP)
(74) Representative: D Young & Co LLP

(57) **Abstract**

Example embodiments of the present disclosure relate to resource allocation in a vehicle. According to embodiments, a method for allocating hardware resources in a vehicle may include: receiving, by a processor (502), information associated with a current operational mode of the vehicle, the current operational mode may be one of a plurality of predetermined operational modes; receiving, by the processor (502), a resource profile (200, 300), wherein the resource profile (200, 300) may include predefined mappings of the plurality of predetermined operational modes and a parameter for allocating at least one resource; and outputting, by the processor (502), information for allocating the at least one resource to at least one application (130) associated based on the current operational mode and the resource profile (200, 300).

## Description

### TECHNICAL FIELD

Example embodiments of the present disclosure relate to resource allocation in a vehicle, and more particularly, relate to hardware resource allocation to one or more applications implemented in the vehicle.

### BACKGROUND

Modem vehicles rely heavily on software for operations such as vehicle performance management, safety systems control, navigation, infotainment, and the like. The rapid advancement of vehicular technology has significantly increased the number of applications implemented in vehicles, thereby escalating the demand for hardware resources in the vehicles. Given the increasing number and complexity of the applications in the vehicles, effective hardware resource allocation in the vehicles has become critical.

### SUMMARY

Example embodiments consistent with the present disclosure effectively and efficiently allocate hardware resources in a vehicle.

According to example embodiments, a method for allocating hardware resources in a vehicle may include: receiving, by a processor, information associated with a current operational mode of the vehicle, the current operational mode may be one of a plurality of predetermined operational modes; receiving, by the processor, a resource profile, wherein the resource profile may include predefined mappings of the plurality of predetermined operational modes and a parameter for allocating at least one resource; and outputting, by the processor, information for allocating the at least one resource to at least one application associated based on the current operational mode and the resource profile.

According to example embodiments, a device for allocating hardware resources in a vehicle may include a memory storage and a processor. The memory storage may store computer-executable instructions and the processor may be communicatively coupled to the memory storage. The processor may be configured to execute the instructions to: receive information associated with a current operational mode of the vehicle, the current operational mode may be one of a plurality of predetermined operational modes; receive a resource profile, wherein the resource profile may include predefined mappings of the plurality of predetermined operational modes and a parameter for allocating at least one resource; output information for allocating the at least one resource to at least one application associated based on the current operational mode and the resource profile.

According to example embodiments, a non-transitory computer-readable recording medium may have recorded thereon instructions executable by a processor to cause the processor to perform a method to allocate hardware resources in a vehicle. The method may include: receiving information associated with a current operational mode of the vehicle, the current operational mode may be one of a plurality of predetermined operational modes; receiving a resource profile, wherein the resource profile may include predefined mappings of the plurality of predetermined operational modes and a parameter for allocating at least one resource; and outputting information for allocating the at least one resource to at least one application associated based on the current operational mode and the resource profile.

Additional aspects will be set forth in part in the description that follows and, in part, will be apparent from the description, or may be realized by practice of the presented embodiments of the disclosure.

### BRIEF DESCRIPTION OF THE DRAWINGS

Features, advantages, and significance of exemplary embodiments of the disclosure will be described below with reference to the accompanying drawings, in which like reference numerals denote like elements, and wherein:
FIG. 1 illustrates a diagram of an example system configuration, according to one or more example embodiments;
FIG. 2 illustrates an example of a resource profile, according to one or more example embodiments;
FIG. 3 illustrates another example of a resource profile, according to one or more example embodiments;
FIG. 4 illustrates a block diagram of an example method for allocating hardware resources in a vehicle, according to one or more example embodiments; and
FIG. 5 illustrates a diagram of an example components of a device that may be configured to implement one or more example embodiments.

### DETAILED DESCRIPTION

The following detailed description of exemplary embodiments refers to the accompanying drawings. The foregoing disclosure provides illustration and description but is not intended to be exhaustive or to limit the implementations to the precise form disclosed. Modifications and variations are possible in light of the above disclosure or may be acquired from practice of the implementations. Further, one or more features or components of one embodiment may be incorporated into or combined with another embodiment (or one or more features of another embodiment). Additionally, in the flowcharts and descriptions of operations provided below, it is understood that one or more operations may be omitted, one or more operations may be added, one or more operations may be performed simultaneously (at least in part), and the order of one or more operations may be switched.

Even though particular combinations of features are recited in the claims and/or disclosed in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Where only one item is intended, the term "one" or similar language is used. Also, as used herein, the terms "has," "have," "having," "include," "including," or the like are intended to be openended terms. Further, the phrase "based on" is intended to mean "based, at least in part, on" unless explicitly stated otherwise. Furthermore, expressions such as "[A] and/or [B]", "at least one of [A] and [B]" or "at least one of [A] or [B]" are to be understood as including only A, only B, or both A and B.

Expressions such as "at least one processor," where configured to implement a plurality of operations, execute a plurality of instructions, etc., are to be understood as a single processor implementing the plurality of operations, etc., or each of plural processors implementing at least some (but not necessarily all) of the plurality of operations, etc.

Reference throughout this specification to "one embodiment," "an embodiment," "non-limiting exemplary embodiment," or similar language means that a particular feature, structure, or characteristic described in connection with the indicated embodiment is included in at least one embodiment of the present disclosure. Thus, the phrases "in one embodiment", "in an embodiment," "in one non-limiting exemplary embodiment," and similar language throughout this specification may, but do not necessarily, all refer to the same embodiment.

Further, the described features, advantages, and characteristics of the present disclosure may be combined in any suitable manner in one or more example embodiments. One skilled in the relevant art will recognize, in light of the description herein, that the present disclosure can be practiced without one or more of the specific features or advantages of a particular embodiment. In other instances, additional features and advantages may be recognized in certain embodiments that may not be present in all embodiments of the present disclosure.

Furthermore, the term "vehicle" described herein refers to any suitable type of vehicle in which example embodiments of the present disclosure can be implemented. For instance, the "vehicle" may refer to a motorized vehicle such as a car, a truck, a bus, a motorcycle, or any other suitable type of automobile powered by an engine, motor, or other mechanical means. Alternatively or additionally, the "vehicle" described herein may refer to a bicycle, a skateboard, and any other suitable types of non-motorized vehicle, without departing from the scope of the present disclosure.

As described above, effective hardware resource allocation in the vehicles has become more critical, due to the increasing number of applications implemented in the vehicles and escalating demand for hardware resources in the vehicles. In the related art, there are two main types of resource allocation in the vehicles, i.e., static resource allocation and real-time resource allocation.

Static resource allocation refers to the allocation of resources based on pre-defined configurations, regardless of the operational status of the vehicle. For instance, a pre-defined, fixed amount of resources is always reserved for any applications that operate when a vehicle is in driving mode, regardless of whether the reserved and allocated resources are required by and will be fully utilized by the applications. This type of resource allocation is inefficient and ineffective in utilizing the resources, namely, the allocated resources may be underutilized since they are allocated to applications/functions that do not require the amount of allocated resources, leading to wastage of resources. Furthermore, static resource allocation may also result in suboptimal performance of the vehicle applications and/or vehicle functionalities, since the allocated resources may not be sufficient to achieve optimal performance.

Real-time resource allocation refers to the allocation of resources based on real-time monitoring and measurements. For instance, the resources may be allocated based on real-time measurement of a time (e.g., a time period after the vehicle has entered a specific operational mode, etc.), real-time measurement of free resources according to real-time operating load, real-time measurement of a processing/execution time of an application, and the like. This type of resource allocation has higher complexity than static resource allocation, since real-time measurement requires continuously collecting and processing data from multiple sources (e.g., sensors, ECUs, etc.) in real-time (or near-real-time), which increases the complexity in designing, testing, and implementing the resource allocation mechanism. Further, this type of resource allocation may be less controllable and less predictable, since it relies on the measurement of real-time conditions. As a result, the resource allocation may vary over-dynamically (e.g., the resource allocation may rapidly change based on sensor inputs and environmental factors, etc.), increasing the risk of causing fluctuation in system performance and inability to guarantee quality of service (QoS) to the users. In addition, this type of resource allocation requires real-time measurement and real-time decision-making with respect to, for example, whether the resource allocation should be executed, how much resource should be allocated, etc. Accordingly, continuous processing is required, and the amount of allocable resources may be reduced since a portion of the resources is required for the resource allocation.

Example embodiments of the present disclosure provide a system, a method, a device, and the like, that efficiently and effectively allocate hardware resources in a vehicle. Specifically, example embodiments of the present disclosure utilize a controller (or a processor that implements the associated operations) that interoperates with other vehicle components (e.g., sensors, etc.) to determine a current operational mode of the vehicle, and then utilize a predefined resource profile to dynamically allocate resources to vehicle applications based on the current operational mode of the vehicle.

Compared to static resource allocation in the related art, example embodiments of the present disclosure may avoid underutilization of allocated resources and wastage of resources, since the resources are dynamically allocated to vehicle applications according to the current operational mode of the vehicle. In addition, the vehicle applications may be allocated sufficient resources (since the applications operate under each operational mode is predetermined and the amount of resources is preassigned thereto based on best practice/historical operations), thereby ensuring the optimal performance of the vehicle applications.

On the other hand, example embodiments of the present disclosure also address the issues in the real-time resource allocation of the related art. Specifically, example embodiments reduce the complexity of resource allocation, since the resource allocation is based on a predefined resource profile, which can be designed and configured according to specific scenarios in non-real-time (i.e., the designing, testing, and implementing of the resource allocation mechanism are simpler as compared to real-time resource allocation based on real-time measurement in the related art). Further, example embodiments provide predictable resource allocation and improved performance stability, since the resource allocation is based on the resource profile, which provides clear, predefined mappings of how resources will be allocated across various operational modes, thereby ensuring consistent and predictable performance under a specific operation mode as well as reducing the risk of sudden/unexpected changes in resource allocation. In addition, since example embodiments allocate resources based on the resource profile, the resource allocation requires significantly lesser real-time operations (e.g., real-time measurements, real-time decision-makings, etc.), thereby reducing the computational demand for resource allocation and allowing more resources (e.g., resources which previously required for real-time measurement and real-time decision making) to be allocated to the applications/functions.

It is contemplated that features, advantages, and significances of example embodiments described herein are merely a portion of the present disclosure, and are not intended to be exhaustive or to limit the scope of the present disclosure. Further descriptions of the features, components, configuration, operations, and implementations of the example embodiments of the present disclosure are provided in the following.

### Example System Configuration

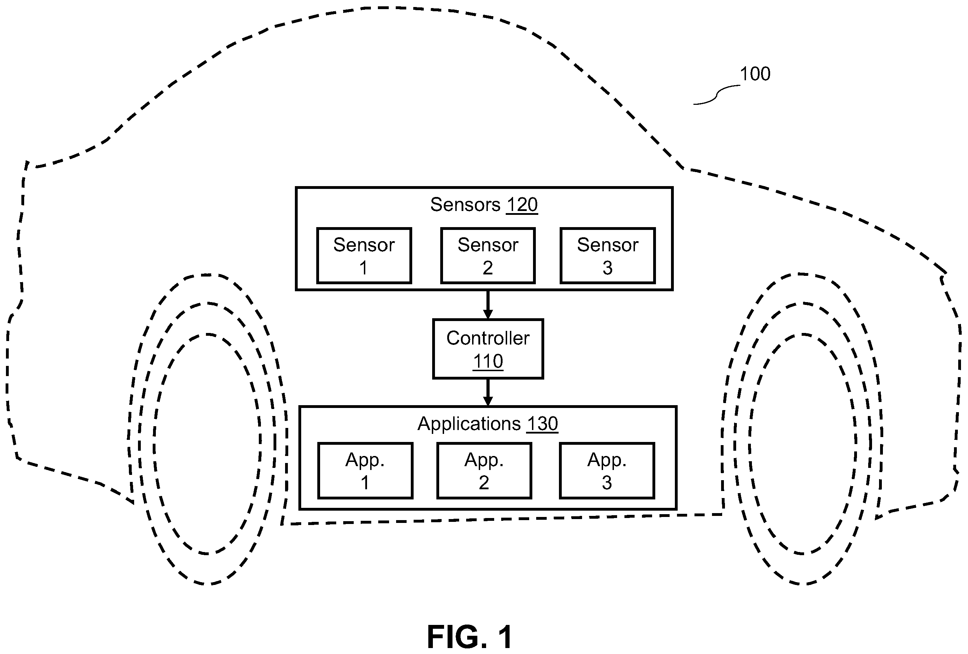

FIG. 1 illustrates a block diagram of an example system configuration, according to one or more example embodiments. As illustrated in FIG. 1, a vehicle system 100 may include a controller 110, a plurality of sensors 120, and a plurality of applications 130. It is contemplated that the number of the controller, sensors, and applications illustrated in FIG. 1 is merely an example simplified for illustrative and descriptive purposes, and any suitable number of such components may be implemented. For instance, the vehicle system 100 may include more than 1 controller 110, the sensors 120 may include more/less than 3 sensors, the applications 130 may include more/less than 3 applications, and the like.

The controller 110 may be communicatively coupled to the plurality of sensors 120 and the plurality of applications 130 (or a component/device that implements the plurality of sensors 120 and/or a component/device that implements the plurality of applications 130) via, for example, a controller area network (CAN) bus, a FlexRay bus, an automotive Ethernet, and/or any other suitable type of communication components.

The controller 110 may refer to the main processor that implements the operations described herein, and may include a processor (e.g., a CPU), a vehicle control unit (VCU), and any other suitable type of controller or processing unit. Thus, the controller 110 may also be referred to as a "processor" or a "processing unit" herein. In some example embodiments, the controller 110 may further include a mode detection module (that receives inputs from the sensors 120 and determines the current operational mode of the vehicle) and a resource manager module (that obtains a resource profile, determines the appropriate resource to be allocated, and outputs information for allocating the resource). These modules may be implemented in dedicated hardware components (e.g., a first processing unit/core may be dedicated to implementing the operations of the mode detection module and a second processing unit/core may be dedicated to implementing the operations of the resource manager module). Alternatively or additionally, these modules may be virtualized software modules and presented in the form of computer-readable instructions. In this regard, these modules may be implemented by one or more processing units upon executing the associated computer-readable instructions.

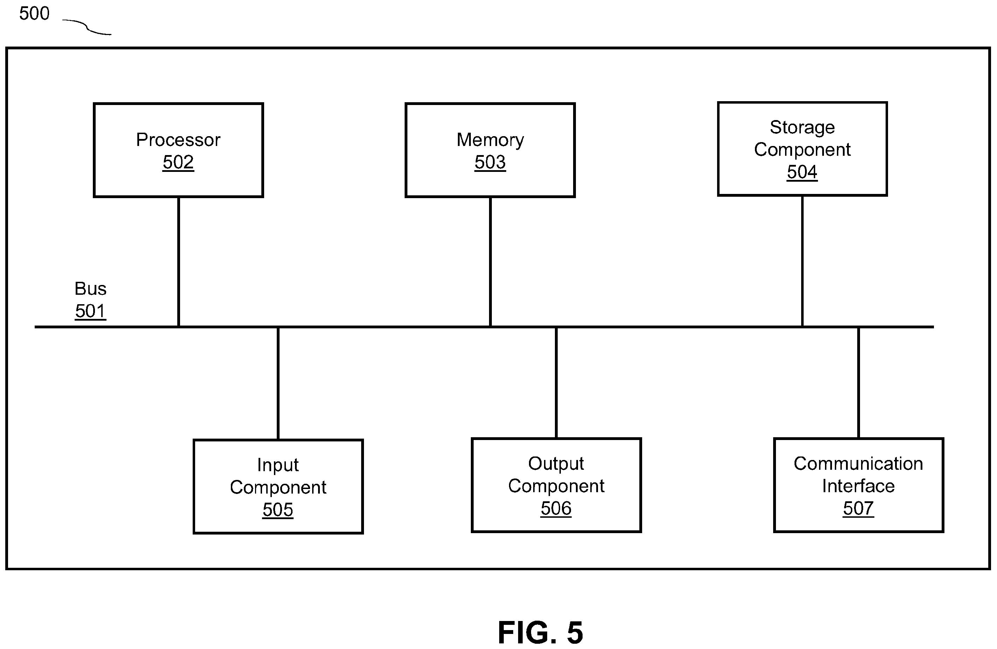

The controller 110 may be implemented in a device or equipment that can be installed or implemented in the vehicle system 100, such as a system on chip (SoC), a vehicle accessory, an aftermarket device, and the like. An example device in which the controller 110 may be implemented is described below with reference to FIG. 5.

The plurality of sensors 120 may include devices or components configured to detect, measure, and capture respective data (may be referred to as "sensor data" herein). A non-limiting list of examples of the sensors 120 includes: an accelerometer which measures and captures data associated with the acceleration/deceleration of the vehicle, the vehicle speed, the vehicle travel distance, and the like; an image sensor (e.g., camera, etc.) which detects and captures image data internal to, external to, surrounding to, or nearby the vehicle; a light detection and ranging (LiDAR) sensor which detects and captures data associated with light in one or more light spectrums, such as the visible spectrum, the infrared spectrum, the ultraviolet spectrum, and/or any other light spectrums; an audio sensor (e.g., microphone, etc.) which may detect and capture audio data internal and/or external to the vehicle; a temperature sensor which measures and captures data associated with temperature internal and/or external to the vehicle; a location sensor (e.g., global positioning system (GPS), inertial measurement unit (IMU), etc.) which measures and captures data associated with the movement, location, position, and/or orientation of the vehicle; a contact sensor (e.g., pressure detector, impact detector, etc.) which detects and captures data between a portion of the vehicle and an object; an air sensor which measure and captures data associated with the air (e.g., oxygen level, pollution level, humidity level, etc.) internal and/or external to the vehicle; a radar sensor which detects and captures distance of the vehicle from a surrounding object; a steering angle sensor which detects and captures steering input, steering position, and the like; an occupancy sensor which detects and captures the cabin vacancy/occupancy; a gear position sensor which detects and captures the current position of the gear (e.g., parking, manual, driving, etc.); a parking brake sensor which detects and captures operations and actuations of the parking brake; a seat occupancy sensor which detects and captures occupancy status of the vehicle seats; a brake pedal sensor which detects and captures operations and actuations of the brake pedal; an engine ignition sensor which detects and captures information associated with the vehicle's engine; and any other sensors suitable to be deployed in the vehicle.

The sensor data may be captured periodically, continuously, intermittently, or based on a trigger event (e.g., an activation of a driving-mode switching button, a determination that the vehicle has been in a still position for a predetermined amount of time, a reception of a connection request from an external device, etc.).

The sensor data captured by the sensors 120 may be persistently or semi-persistently stored in the vehicle system 100 (e.g., stored in a memory and/or a storage component implemented in the vehicle system 100, etc.) for a predetermined period of time. Alternatively or additionally, the sensors 120 may be internet-of-things (IoT) based, which enables the vehicle system 100 to communicate with one or more external storage mediums to store the measured sensor data therein.

The applications 130 may include a wide range of applications implementable in the vehicle system 100 to enhance vehicle performance, safety and security, and user experience. For instance, the applications 130 may include: safety-critical applications such as advanced driver assistance system (ADAS) applications, electronic stability control (ESC) applications, tire pressure monitoring applications, and the like; vehicle control and management applications such as heating, ventilation, and air conditioning (HVAC) applications, shadow mode applications, powertrain control applications, and the like; infotainment applications such as cockpit applications, in-vehicle infotainment (IVI) applications, entertainment applications, and the like; security applications such as recording applications, vehicle security applications, intrusion detection applications, and the like. It is contemplated that the applications 130 may include any other suitable type of application, without departing from the scope of the present disclosure.

The applications 130 may be implemented in various forms based on the deployment and execution requirements. For instance, the applications 130 may be implemented in the form of containerized applications, virtualized applications, bare-metal applications, real-time operating system (RTOS)-based applications, middleware-based applications, and the like. According to example embodiments, one or more of the applications 130 may be controlled or managed by an associated electronic control unit (ECU). For instance, an ADAS application may be implemented, controlled, and managed by an ADAS ECU. Alternatively or additionally, one or more of the applications 130 may be implemented in a virtual machine (VM), and the VM may be controlled or managed by a hypervisor. Alternatively or additionally, one or more of the applications 130 may be implemented in an OS. Alternatively or additionally, one or more of the applications 130 may be controlled or managed by a resource manager (or an associated middleware). Furthermore, the applications 130 may utilize one or more artificial intelligence (AI)/machine learning (ML) models or technologies to further enhance the performance and enrich the associated features.

According to example embodiments, the controller 110 may be configured to interoperate with the sensors 120 to allocate hardware resources to the applications 130. Specifically, the controller 110 may receive, from the sensors 120, information associated with/indicative of a current operational mode of the vehicle. The current operational mode may constitute of a primary operational mode (e.g., a driving mode, a parking mode, etc.) and a secondary operational mode (e.g., an ADAS mode, a shadow mode, a navigation mode, an entertainment mode, a gaming mode, etc.). Accordingly, the controller 110 may receive a resource profile and then allocate resource(s) to the applications 130 based on the current operational mode and the resource profile. For instance, the controller 110 may determine, based on the resource profile, the predefined resource allocation parameters for allocating a resource to an application associated with the current operational mode (e.g., how many CPU/GPU cores are allocated to the ADAS application under the current driving mode, etc.). Subsequently, the controller 110 may output information for allocating the resource to the application.

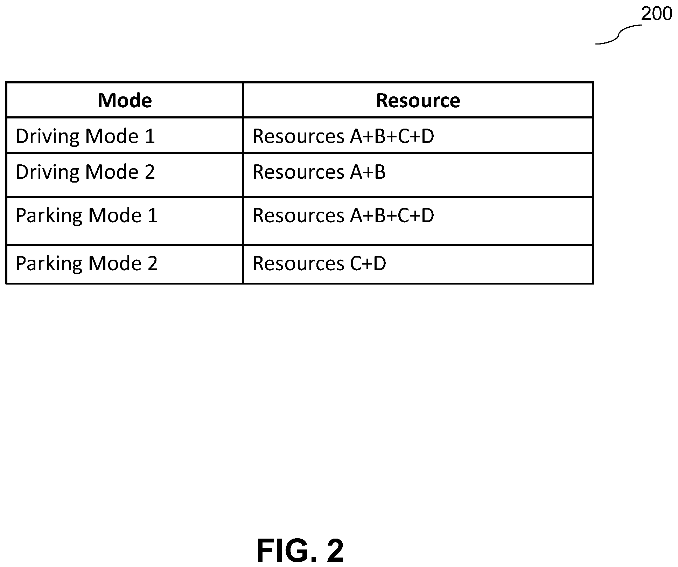

According to example embodiments, the resource profile may include predefined mappings of a plurality of predetermined operational modes and a parameter for allocating resource(s) in each of the operational modes. FIG. 2 illustrates an example of a resource profile 200, according to one or more example embodiments. As illustrated in FIG. 2, the resource profile 200 may include mappings of four operational modes (i.e., driving mode 1, driving mode 2, parking mode 1, and parking mode 2) and the corresponding resource allocation parameters. As a non-limiting example, driving mode 1 may be a "sport mode" and driving mode 2 may be an "eco mode". Thus, driving mode 1 may be preassigned four resources (i.e., resources A-D) to ensure that sufficient resources are allocated for enhancing driving performance and responsiveness when the vehicle is under "sport mode", while driving mode 2 may be preassigned two resources (e.g., resources A-B) to ensure that sufficient resources are allocated for normal driving operation and performance while conversing the resources when the vehicle is under "eco mode".

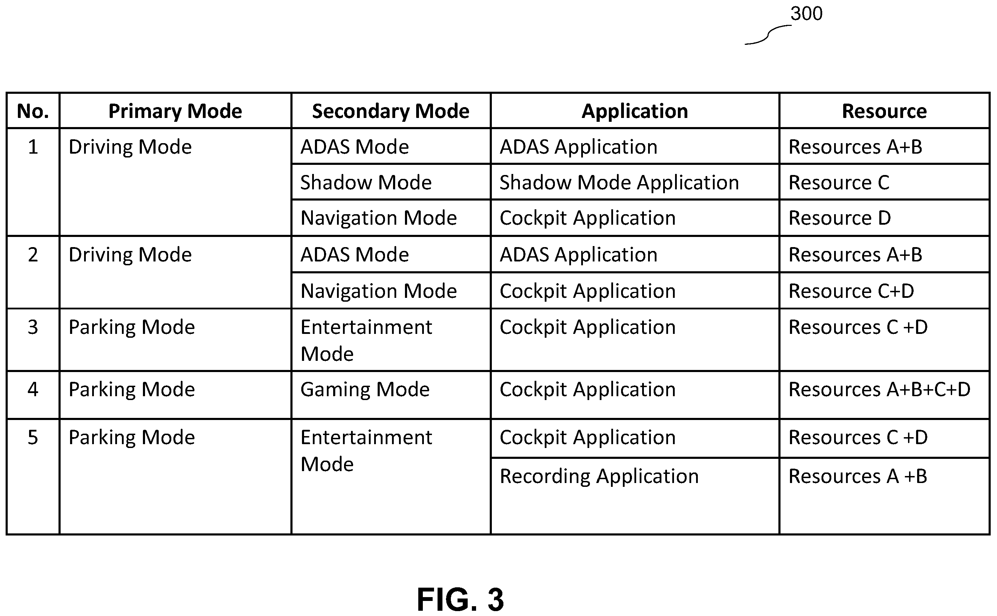

FIG. 3 illustrates another example of a resource profile 300, according to one or more example embodiments. As illustrated in FIG. 3, the resource profile 300 may include more specific information associated with resource allocation under each operational mode. Specifically, the resource profile 300 may include information of: a plurality of primary operational modes (e.g., driving mode, parking mode, etc.), at least one secondary mode (e.g., ADAS mode, shadow mode, navigation mode, entertainment mode, gaming mode, etc.) that is associated with at least one of the plurality of primary operational modes, at least one application (e.g., ADAS application, shadow mode application, cockpit application, recording application, etc.) associated with the at least one secondary mode, and a parameter for allocating at least one resource to the at least one application.

According to example embodiments, the hardware resources which may be allocated by the controller 110 may include at least one of: a central processing unit (CPU), a graphic processing unit (GPU), a neural processing unit (NPU), a memory (e.g., RAM, etc.), a storage, a network bandwidth, and the like. In this regard, the resource profile may include parameter for allocating the resource(s), such as: a predefined number of cores of the CPU (e.g., number of CPU cores allocated to the corresponding operational mode, etc.), a predefined clock speed of the CPU (e.g., frequency (e.g., GHz, MHz) of the CPU allocated to the corresponding operational mode, etc.), a predefined number of cores of the GPU (e.g., number of GPU cores allocated to the corresponding operational mode, etc.), a predefined clock speed of the GPU (e.g., frequency (e.g., GHz, MHz) of the GPU allocated to the corresponding operational mode, etc.), a predefined memory bandwidth of the GPU (e.g., amount of graphic memory (e.g., GB, MB) of the GPU allocated to the corresponding operational mode, etc.), a predefined number of cores of the NPU (e.g., number of NPU cores allocated to the corresponding operational mode, etc.), a predefined clock speed of the NPU (e.g., frequency (e.g., GHz, MHz) of the NPU allocated to the corresponding operational mode, etc.), a predefined amount of the memory (e.g., amount of RAM (e.g., GB, MB) allocated to the corresponding operational mode, etc.), a predefined privilege for utilizing the memory (e.g., permission for direct memory access to the RAM under the corresponding operational mode, permission for utilizing cache memory under the corresponding operational mode, high priority in accessing the memory under the corresponding operational mode, etc.), a predefined amount of storage (e.g., amount of storage (e.g., GB, MB) allocated to the corresponding operational mode for temporary/periodic storage, etc.), a predefined privilege for utilizing the storage (e.g., permission to Read/Write the storage under the corresponding operational mode, higher priority in accessing the storage under the corresponding operational mode, etc.), and a predefined amount of network bandwidth (e.g., amount of bandwidth (e.g., Gbps, Mbps) allocated to the corresponding operational mode), and the like.

The resource profile may be predefined by the vehicle manufacturer (e.g., based on best practices or historical data for a specific vehicle mode, based on the preference of a specific driver, etc.) and may be stored in a storage medium (e.g., storage component, memory, etc.) accessible by the controller 110. The controller 110 may access the storage medium that stores the resource profile and may manage (e.g., utilize, update, etc.) the resource profile.

According to example embodiments, the controller 110 may be configured to periodically update the resource profile. For instance, the controller 110 may receive, from a user equipment (e.g., a device/system of the vehicle manufacturer, etc.) via over-the-air (OTA), an instruction to update the resource profile. Accordingly, the controller 110 may update the resource profile based on the received instruction. In some example embodiments, the update is a delta/incremental update. Namely, instead of downloading and replacing the entire resource profile, the controller 110 may determine a difference (e.g., "delta") between the existing resource profile and the updated resource profile, and may download and install/update only the portion that is different from the existing resource profile. According to example embodiments, the controller 110 may periodically (or continuously) provide, to the user equipment (e.g., the device/system of the vehicle manufacturer) via OTA, information associated with or indicative of the driver's driving habits or preferences. Accordingly, the user (e.g., the vehicle manufacturer) may customize a resource profile based on the driver's driving habits or preferences (e.g., a driver who frequently uses navigation applications may be provided a resource profile that prioritizes the frequently used navigation applications, etc.), and then provide the customized resource profile to the controller 110. Subsequently, the controller 110 may update the existing resource profile to be consistent with the customized resource profile. In some example embodiments, the controller 110 may utilize an AI/ML model to determine or update a resource profile based on inputs such as the driver's driving habits, etc.

Upon determining the resource(s) to be allocated, the controller 110 may be configured to output information for allocating the resource(s). For instance, the controller 110 may generate an instruction for allocating the resource(s) to an application(s), and then output the instruction to one or more of: an ECU associated with the application(s), an OS that implements the application(s), a hypervisor that manages a VM that implements the application(s), and a resource manager that manages the resource(s). According to example embodiments, the controller 110 may generate the instructions by: determining, from among the mappings in the resource profile, a mapping associated with the current operational mode; determining, from the determined mapping, the parameter(s) for allocating the resource(s); and generating the instructions that include the parameter(s) for allocating the at least one resource.

### Example Operations

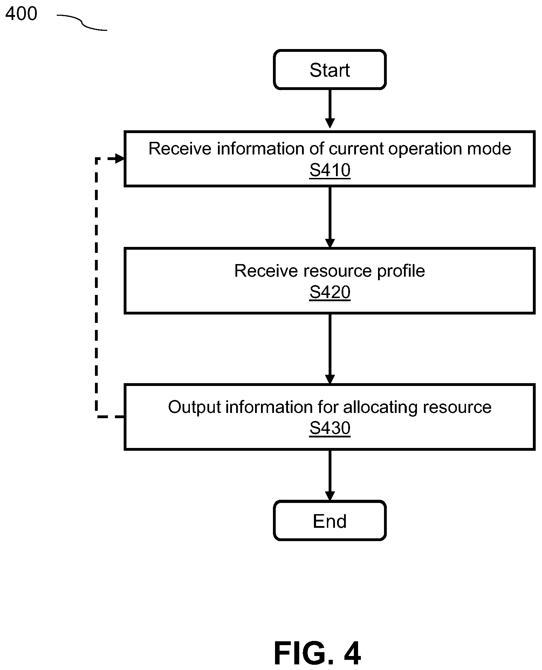

As described above, various operations may be performed by the controller 110 (or a device that implements the controller 110) to allocate hardware resources in the vehicle system 100. Several example operations, according to one or more example embodiments, are described in the following with reference to FIG. 4. One or more operations (or the data involved therein) may be similar to those described above with reference to FIGs. 1-3, thus it may be understood that the described operation(s)/data may be similarly applied to the operations in FIG. 4 (unless described otherwise) and redundant descriptions associated therewith may be omitted for conciseness.

For descriptive purposes, the operations are mainly described as being performed by the controller 110 or a processor that implements the operations of the controller 110. Specifically, according to example embodiments, the controller 110 may include (or may be implemented in) one or more hardware components or devices, and one or more operations described hereinbelow may be performed by said one or more hardware components. For instance, the vehicle system 100 may include (or may implement) a processor and a memory/storage, wherein the memory/storage may include computer-executable instructions which, when being executed by the processor, cause the processor to perform one or more operations described herein.

FIG. 4 illustrates a block diagram of an example method 400 for allocating hardware resources in a vehicle, according to one or more example embodiments.

At operation S410, the controller 110 (or the associated processor) may be configured to receive information associated with a current operational mode of the vehicle. For instance, the controller 110 (or the associated processor) may receive, from one or more of the sensors 120, sensor data associated with the vehicle and then determine the current operational mode based thereon. In this regard, the current operational mode may be one of a plurality of predetermined operational modes (e.g., driving mode, parking mode, etc.). In some example embodiments, the current operational mode may be constituted by a primary operational mode and a secondary operational mode. For example, the current operational mode may include a driving mode (i.e., a primary operational mode) with the ADAS mode (i.e., a secondary operational mode) enabled, a parking mode (i.e., a primary operational mode) with the gaming mode (i.e., a secondary operational mode) enabled, and the like.

At operation S420, the controller 110 (or the associated processor) may be configured to receive a resource profile. As described above with reference to FIG. 2, the resource profile may include predefined mappings of the plurality of predetermined operational modes and a parameter(s) for allocating at least one resource. Further, as described above with reference to FIG. 3, the plurality of predetermined operational modes may be a plurality of primary operational modes, and the resource profile may also include mappings of: the plurality of primary operational modes, a plurality of secondary operational modes (each of which may be associated with at least one of the plurality of primary operational modes), at least one application associated with at least one of the plurality of secondary operational modes, and the parameter for allocating the at least one resource.

As also described above with reference to FIG. 3, according to example embodiments, the at least one resource may include at least one of: a central processing unit (CPU), a graphic processing unit (GPU), a neural processing unit (NPU), a memory, a storage, a network bandwidth, and the like. Further, the resource profile may include parameter for allocating the at least one resource, such as: a predefined number of cores of the CPU, a predefined clock speed of the CPU, a predefined number of cores of the GPU, a predefined clock speed of the GPU, a predefined memory bandwidth of the GPU, a predefined number of cores of the NPU, a predefined clock speed of the NPU, a predefined amount of the memory, a predefined privilege for utilizing the memory, a predefined amount of storage, a predefined privilege for utilizing the storage, and a predefined amount of network bandwidth, and the like.

It is contemplated that the operations S410 and S420 may be performed in any suitable sequential manner, without departing from the scope of the present disclosure. For instance, operation S410 may be performed before operation S420, concurrently with operation S420, and/or after operation S420.

Referring still to FIG. 4, at operation S430, the controller 110 (or the associated processor) may be configured to output information for allocating the at least one resource to at least one associated application based on the current operational mode and the resource profile. For instance, the controller 110 (or the associated processor) may generate an instruction for allocating the at least one resource to the at least one application and then output the instruction to a component that implements/manages the at least one application (e.g., an ECU associated with the at least one application, an OS that implements the at least one application, a hypervisor that manages a VM that implements the at least one application, a resource manager that manages the at least one resource, etc.). In some example embodiments, the controller 110 (or the associated processor) may determine a mapping associated with the current operational mode from among the mappings in the resource profile, determine the parameter for allocating the at least one resource from the determined mapping, and then generate the instruction that includes the parameter for allocating the at least one resource.

Upon performing operation S430, the method 400 may be terminated. Alternatively, the method 400 may return to operation S410, such that the controller 110 (or the associated processor) may repeat operations S410-S430 for at least a predetermined period of time.

It is contemplated that the operations illustrated in FIG. 4 are merely examples and the scope of the present disclosure should not be limited thereto. Specifically, the method 400 may include more/less operations than as illustrated, and/or may perform the operations in any suitable sequential manner, without departing from the scope of the present disclosure. For instance, in some example embodiments, concurrently with the operations of method 400, the controller 110 (or the associated processor) may also be configured to manage the resource profile (e.g., receive an instruction to update the resource profile from a user equipment via OTA, update at least a portion of the resource profile based on the received instruction, etc.).

### Example Components

FIG. 5 illustrates a diagram of example components of a device 500, according to one or more example embodiments. In some example embodiments, the device 500 may be an in-vehicle device that implements the controller 110 (or one or more operations associated therewith). The device 500 may include any device or equipment that can be installed or implemented in a vehicle to interoperate with other components, such as the sensors, of the vehicle. For instance, the device 500 may include an SoC, a vehicle accessory, an aftermarket device (e.g., a device that can be installed or added to the vehicle after the vehicle is sold, etc.), and the like.

As illustrated in FIG. 5, the device 500 may include at least one bus 501, at least one processor 502, at least one memory 503, at least one storage component 504, at least one input component 505, at least one output component 506, and at least one communication interface 507.

It is contemplated that the device 500 may include more or fewer components than illustrated in FIG. 5, without departing from the scope of the present disclosure. For instance, in some embodiments, the device 500 may include a plurality of storage components 504, the input component 505 and the output component 506 may be implemented as a transceiver component, the memory 503 and storage component 504 may be implemented as a memory storage, and the like.

The bus 501 may be configured to facilitate or enable communications among the components of the device 500. Specifically, the bus 501 may communicatively couple the components to each other and provide a means for data transfer and flow of control signals between the components. The bus 501 may include one or more of: an internal bus, an address bus, a data bus, a control bus, a controller area network (CAN) bus, an Ethernet bus, a peripheral component interconnect express (PCIe) bus, and any other suitable type of bus that can be implemented in the device 500 to enable communication and coordination between the components within the device 500 in real-time (or near real-time).

The processor 502 may be implemented in hardware, firmware, or a combination of hardware and software, and may be configured to handle real-time (or near real-time) data processing and control of the control device 500. The processor 502 may include one or more of: a central processing unit (CPU), a graphics processing unit (GPU), a neural processing unit (NPU), a tensor processing unit (TPU), an accelerated processing unit (APU), a microprocessor, a microcontroller, a digital signal processor (DSP), a field-programmable gate array (FPGA), an application-specific integrated circuit (ASIC), and/or another type of processing or computing component that can be implemented in the device 500. In some implementations, the processor 502 may be capable of being programmed to perform one or more operations described herein. Further, the processor 502 may include a plurality of processing units, each of which may be dedicated to performing a specific operation.

The memory 503 may include one or more mediums for storing temporary data, runtime variables, program instructions, and buffers required for the operations of the control device 500. The memory 503 may include one or more of: a flash memory, a read-only memory (ROM), a random-access memory (RAM), a dynamic or static storage device (e.g., a flash memory, a magnetic memory, and/or an optical memory), any other suitable type of memory that can be implemented in the device 500 to store information and/or instructions for use by the processor 502.

The storage component 504 may be configured to store non-volatile data, such as firmware, configuration settings, calibration data, information, and/or software related to the operation and use of the device 500. For example, the storage component 504 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of non-transitory computer-readable medium, along with a corresponding drive.

According to embodiments, the memory 503 and/or the storage component 504 may be configured to store computer-readable or computer-executable instructions for implementing one or more operations of the device 500. The memory 503 and/or the storage component 504 may provide the stored information to the memory 503 for the execution of the processor 502. Furthermore, the memory 503 and/or the storage component 504 may include data or information that may be utilized by the processor 502 to allocate the resources, such as the resource profile described herein. Further, the memory 503 and/or the storage component 504 may be configured to store one or more data involved in the operations of the device 500, such as the resource profile, the sensor data, the information associated with the operational mode of the vehicle, the information for allocating the resource, and the like.

The input component 505 may include one or more input components that permit the device 500 to receive information, such as via user input (e.g., a touch screen display, a keyboard, a keypad, a mouse, a button, a switch, and/or a microphone). The output component 506 may include one or more output components that provide output information from the device 500 (e.g., a display, a speaker, a navigation device, one or more light-emitting diodes (LEDs), etc.) According to embodiments, the input component 505 and/or the output component 506 may be optional and may be excluded from the device 500.

The at least one communication interface 507 may include a transceiver-like component (e.g., a transceiver and/or a separate receiver and transmitter) that enables the device 500 to communicate with other components (e.g., ECUs, user devices, etc.), such as via a wired connection, a wireless connection, or a combination of wired and wireless connections. For example, communication interface 507 may include a controller area network (CAN) bus interface, an Ethernet interface, an optical interface, a coaxial interface, an infrared interface, a radio frequency (RF) interface, a universal serial bus (USB) interface, a Wi-Fi interface, a cellular network interface, or the like.

According to one or more embodiments, the communication interface 507 may include at least one input/output (I/O) interface, at least one network interface, at least one storage interface, or the like, that enable the components 502-506 to communicate with other components. Further, the communication interface 507 may include one or more application programming interfaces (APIs) that allow the device 500 (or one or more components included therein) to communicate with one or more software applications (e.g., software application managed by the ECUs, etc.)

Computer-executable instructions (e.g., software instructions, etc.) may be read into memory 503 and/or storage component 504 from another computer-readable medium or from another device (e.g., a remote server, an external storage, etc.) via, for example, the communication interface 507. When executed, the computer-executable instructions stored in memory 503 and/or storage component 504 may cause the processor 502 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

### Various Aspects of Embodiments

It is contemplated that features, advantages, and significances of example embodiments described hereinabove with reference to FIG. 1 to FIG. 5 are merely a portion of the present disclosure, and are not intended to be exhaustive or to limit the scope of the present disclosure. Further descriptions of the features, components, configuration, operations, and implementations of example embodiments of the present disclosure, as well as the associated technical advantages and significances, are provided in the following.

It is understood that the specific order or hierarchy of blocks in the processes/ flowcharts disclosed herein is an illustration of example approaches. Based upon design preferences, it is understood that the specific order or hierarchy of blocks in the processes/ flowcharts may be rearranged. Further, some blocks may be combined or omitted. The accompanying method claims present elements of the various blocks in a sample order, and are not meant to be limited to the specific order or hierarchy presented.

Some embodiments may relate to a system, a method, and/or a computer-readable medium at any possible technical detail level of integration. Further, as described hereinabove, one or more of the above components described above may be implemented as instructions stored on a computer readable medium and executable by at least one processor (and/or may include at least one processor). The computer-readable medium may include a computer-readable non-transitory storage medium (or media) having computer-readable program instructions thereon for causing a processor (or processors) to carry out operations.

The computer readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program code/instructions for carrying out operations may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object-oriented programming languages such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects or operations.

These computer readable program instructions may be provided to a processor of a SoC, a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or another device to cause a series of operational steps to be performed on the computer, other programmable apparatus or other device to produce a computer-implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer-readable media according to various embodiments. In this regard, each block in the flowchart or block diagrams may represent a module, segment, or portion of instructions, which comprises one or more executable instructions for implementing the specified logical function(s). The method, computer system, and computer-readable medium may include additional blocks, fewer blocks, different blocks, or differently arranged blocks than those depicted in the Figures. In some alternative implementations, the functions noted in the blocks may occur out of the order noted in the Figures. For example, two blocks shown in succession may, in fact, be executed concurrently or substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware may be designed to implement the systems and/or methods based on the description herein.

## Claims

1. A method for allocating hardware resources in a vehicle, the method comprising:
receiving, by a processor (502), information associated with a current operational mode of the vehicle, the current operational mode being one of a plurality of predetermined operational modes;
receiving, by the processor (502), a resource profile (200, 300), wherein the resource profile (200, 300) comprises predefined mappings of the plurality of predetermined operational modes and a parameter for allocating at least one resource; and
outputting, by the processor (502), information for allocating the at least one resource to at least one application (130) associated based on the current operational mode and the resource profile (200, 300).

2. The method according to claim 1, wherein the plurality of predetermined operational modes is a plurality of primary operational modes, and wherein the resource profile (300) comprises mappings of:
the plurality of primary operational modes;
a plurality of secondary operational modes, wherein each of the plurality of secondary modes is associated with at least one of the plurality of primary operational modes;
the at least one application (130), wherein the at least one application (130) is associated with at least one of the plurality of secondary operational modes; and
the parameter for allocating the at least one resource.

3. The method according to claim 2, wherein the plurality of primary operational modes comprises a driving mode and a parking mode; and wherein the plurality of secondary operational mode comprises an advanced driver assistance system (ADAS) mode, a shadow mode, a navigation mode, an entertainment mode, and a gaming mode.

4. The method according to any one of claims 1 to 3, wherein the at least one resource comprises at least one of: a central processing unit (CPU), a graphic processing unit (GPU), a neural processing unit (NPU), a memory, a storage, and a network bandwidth.

5. The method according to claim 4, wherein the parameter for allocating the at least one resource comprises at least one of: a predefined number of cores of the CPU, a predefined clock speed of the CPU, a predefined number of cores of the GPU, a predefined clock speed of the GPU, a predefined memory bandwidth of the GPU, a predefined number of cores of the NPU, a predefined clock speed of the NPU, a predefined amount of the memory, a predefined privilege for utilizing the memory, a predefined amount of the storage, a predefined privilege for utilizing the storage, and a predefined amount of the network bandwidth.

6. The method according to any one of claims 1 to 5, wherein the outputting the information for allocating the at least one resource comprises:
generating, by the processor (502), an instruction for allocating the at least one resource to the at least one application (130); and
outputting, by the processor (502), the instruction to at least one of: an electronic control unit (ECU) associated with the at least one application (130), an operating system (OS) that implements the at least one application (130), a hypervisor that manages a virtual machine (VM) that implements the at least one application (130), and a resource manager that manages the at least one resource.

7. The method according to claim 6, wherein the generating the instruction comprises:
determining, by the processor (502) and from among the mappings in the resource profile (200, 300), a mapping associated with the current operational mode;
determining, by the processor (502) and from the determined mapping, the parameter for allocating the at least one resource; and
generating, by the processor (502), the instruction, wherein the instruction comprises the parameter for allocating the at least one resource.

8. The method according to any one of claims 1 to 7, wherein the method further comprises:
receiving, by the processor (502) and from a user equipment via over-the-air (OTA), an instruction to update the resource profile (200, 300); and
updating, by the processor (502), at least a portion of the resource profile (200, 300) based on the received instruction.

9. A device (500) for allocating hardware resources in a vehicle, the device (500) comprising:
a memory storage storing computer-executable instructions; and
a processor (502) communicatively coupled to the memory storage, wherein the processor (502) is configured to execute the instructions to:
receive information associated with a current operational mode of the vehicle, the current operational mode being one of a plurality of predetermined operational modes;
receive a resource profile (200, 300), wherein the resource profile (200, 300) comprises predefined mappings of the plurality of predetermined operational modes and a parameter for allocating at least one resource; and
output information for allocating the at least one resource to at least one application (130) associated based on the current operational mode and the resource profile (200, 300).

10. The device (500) according to claim 9, wherein the plurality of predetermined operational modes is a plurality of primary operational modes, and wherein the resource profile (300) comprises mappings of:
the plurality of primary operational modes;
a plurality of secondary operational modes, wherein each of the plurality of secondary modes is associated with at least one of the plurality of primary operational modes;
the at least one application (130), wherein the at least one application (130) is associated with at least one of the plurality of secondary operational modes; and
the parameter for allocating the at least one resource.

11. The device (500) according to claim 10, wherein the plurality of primary operational modes comprise a driving mode and a parking mode; and wherein the plurality of secondary operational mode comprises an advanced driver assistance system (ADAS) mode, a shadow mode, a navigation mode, an entertainment mode, and a gaming mode.

12. The device (500) according to any one of claims 9 to 11, wherein the at least one resource comprises at least one of: a central processing unit (CPU), a graphic processing unit (GPU), a neural processing unit (NPU), a memory, a storage, and a network bandwidth.

13. The device (500) according to claim 12, wherein the parameter for allocating the at least one resource comprises at least one of: a predefined number of cores of the CPU, a predefined clock speed of the CPU, a predefined number of cores of the GPU, a predefined clock speed of the GPU, a predefined memory bandwidth of the GPU, a predefined number of cores of the NPU, a predefined clock speed of the NPU, a predefined amount of the memory, a predefined privilege for utilizing the memory, a predefined amount of storage, a predefined privilege for utilizing the storage, and a predefined amount of network bandwidth.

14. The device (500) according to any one of claims 9 to 13, wherein the processor (502) is configured to execute the instructions to output the information for allocating the at least one resource by:
generating an instruction for allocating the at least one resource to the at least one application (130); and
outputting the instruction to at least one of: an electronic control unit (ECU) associated with the at least one application (130), an operating system (OS) that implements the at least one application (130), a hypervisor that manages a virtual machine (VM) that implements the at least one application (130), and a resource manager that manages the at least one resource.

15. The device (500) according to claim 14, wherein the processor (502) is configured to execute the instructions to generate the instruction by:
determining, from among the mappings in the resource profile (200, 300), a mapping associated with the current operational mode;
determining, from the determined mapping, the parameter for allocating the at least one resource; and
generating the instruction, wherein the instruction comprises the parameter for allocating the at least one resource.

16. The device (500) according to any one of claims 9 to 15, wherein the processor (502) is further configured to execute the instructions to:
receive, from a user equipment via over-the-air (OTA), an instruction to update the resource profile (200, 300); and
update at least a portion of the resource profile (200, 300) based on the received instruction.

17. A computer program causing a processor (502) to perform a method to allocate hardware resources in a vehicle, the method comprising:
receiving, by the processor (502), information associated with a current operational mode of the vehicle, the current operational mode being one of a plurality of predetermined operational modes;
receiving, by the processor (502), a resource profile (200, 300), wherein the resource profile (200, 300) comprises predefined mappings of the plurality of predetermined operational modes and a parameter for allocating at least one resource; and
outputting, by the processor (502), information for allocating the at least one resource to at least one application (130) associated based on the current operational mode and the resource profile (200, 300).

18. The computer program according to claim 17, wherein the plurality of predetermined operational modes is a plurality of primary operational modes, and wherein the resource profile (300) comprises mappings of:
the plurality of primary operational modes;
a plurality of secondary operational modes, wherein each of the plurality of secondary modes is associated with at least one of the plurality of primary operational modes;
the at least one application (130), wherein the at least one application (130) is associated with at least one of the plurality of secondary operational modes; and
the parameter for allocating the at least one resource.

19. The computer program according to claim 18, wherein the plurality of primary operational modes comprises a driving mode and a parking mode; and wherein the plurality of secondary operational mode comprises an advanced driver assistance system (ADAS) mode, a shadow mode, a navigation mode, an entertainment mode, and a gaming mode.

20. The computer program according to any one of claims 17 to 19, wherein the at least one resource comprises at least one of: a central processing unit (CPU), a graphic processing unit (GPU), a neural processing unit (NPU), a memory, a storage, and a network bandwidth.
